# EUROPEAN PATENT APPLICATION

(11) **EP 4 653 855 A1**
(43) Date of publication of application: **26.11.2025**
(21) Application number: 24177097.3
(22) Date of filing: 21.05.2024
(51) Int. Cl.: G01N 23/04, B65B 1/30, B65B 57/10

(54) **METHOD AND APPARATUS FOR MANUFACTURING A POUCHED PRODUCT FOR ORAL USE**

(71) Applicant: Nicoventures Trading Limited, London WC2R 3LA (GB)
(72) Inventor: JONES, Dorcas, London, WC1R 3LA (GB); FOX, Nicholas, Nottingham, NG1 4JA (GB); CHAHAL, Harbir, Nottingham, NG1 4JA (GB)
(74) Representative: Hancox, Jonathan Christopher

(57) **Abstract**

A method of manufacturing a pouched product 10 containing a dose of powdered material and an object is disclosed. The powdered material and the object are supplied to an interior volume of a partially-formed pouch formed by a substantially continuous pouch material. The pouch material is then sealed to create the pouched product. An x-ray image of the pouch is obtained to determine one or more of: the presence or absence of the powder and/or object within the pouched product, the quantity of powder and/or objects within the pouched product, the location of the powder and/or object within the pouched product, the condition of the powder and/or object and/or pouch material, and the presence or absence of a foreign object within the pouched product. The image is obtained using an x-ray source 200 and a flat panel detector 220 or a linear detector 320. The pouched product is rejected if the powder and/or object is absent from the pouched product, or if a foreign object is present within the pouched product, or if the quantity of powder within the pouched product does not meet a threshold quantity. If the object is a capsule containing a liquid, the pouched product is rejected if the capsule is in a burst condition or if the powder is wet.

## Description

### Technical Field

The present disclosure relates to a method of manufacturing a pouched product for oral use containing a dose of powdered material and an object, such as a capsule. Apparatus for manufacturing a pouched product is also disclosed.

### Background

Oral tobacco products containing nicotine have been available for many years. Conventional formats for so-called "smokeless" tobacco products include moist snuff, snus, and chewing tobacco, which are typically formed of particulate, granular, or shredded tobacco, and which are either portioned by the user or presented to the user in individual portions, such as in single-use pouches or sachets. In addition, traditional tobacco materials and non-tobacco materials have been combined with other ingredients to form product formats distinct from traditional smokeless products, with example formats including lozenges, pastilles, gels, and the like.

Other oral products may contain flavourants and/or active ingredients such as nicotine, caffeine, botanicals, or cannabidiol. The format of such products can vary, and include pouched products containing a powdered or granular composition, lozenges, pastilles, liquids, gels, emulsions, meltable compositions, and the like. Oral pouched products may contain a powdered or granular composition together with an object such as a bead or capsule which may release additional flavourants or active ingredients, possibly over time, to enhance the user's experience.

The present invention relates to the manufacture of oral pouched products containing a powdered or granular composition together with an object. Such products are typically formed by supplying a web of pouch material (typically a water-permeable nonwoven material) to a dosing device, which includes a supply channel or tube around which a continuous tube of pouch material is formed. The leading end of the continuous tube is sealed beyond the end of the supply channel, at which point the internal contents of the product (i.e. the powder dose and capsule) are supplied to the interior of the tube, typically using pressurised air, which come to rest adjacent the interior of the sealed leading end. The trailing end of the pouch can then be sealed and separated from the continuous tube to form a discrete pouched product containing the powder dose and the object. Simultaneously, the new leading end of the continuous tube is sealed beyond the end of the supply channel and the process is repeated to form the next pouched product.

The present invention is intended to provide an improved manufacturing method and apparatus in which various attributes of the final product can be assessed and monitored in order to prevent product reaching the consumer which is not within predetermined quality or specification thresholds. Additional advantages may also be provided by the present invention.

### Summary of the Invention

In a first aspect of the present invention, there is provided a method of manufacturing a pouched product containing a dose of powdered material and an object, comprising: supplying the powdered material and the object to an interior volume of a partially-formed pouch formed by a substantially continuous pouch material, sealing the pouch material to create the pouched product, and obtaining an x-ray image of the pouch to determine one or more of: the presence or absence of the powder and/or object within the pouched product, the quantity of powder and/or objects within the pouched product, the location of the powder and/or object within the pouched product, the condition of the powder and/or object and/or pouch material, and the presence or absence of a foreign object within the pouched product.

In some embodiments, the method further comprises rejecting the pouched product if the powder and/or object is absent from the pouched product, or if a foreign object is present within the pouched product.

In some embodiments, the method further comprises rejecting the pouched product if the quantity of powder within the pouched product does not meet a threshold quantity.

In some embodiments, determining the location of the powder and/or object within the pouched product comprises determining the location of the object relative to the powder and/or determining the location of the object and/or powder relative to the pouch.

In some embodiments, the object is a capsule containing a liquid. Determining the condition of the capsule may include determining whether the capsule is in a burst or unburst condition. Determining the condition of the powder may include determining whether the powder is in a wet or dry condition.

In some embodiments, determining the condition of the pouch material includes determining whether the pouch material is in a sealed or unsealed condition.

In some embodiments, the determining step comprises comparing a property of the x-ray image with a threshold property. The property may relate to shape, outline, shading, brightness, contrast. The method may further comprise rejecting the pouched product if the property does not meet the threshold.

In some embodiments, the x-ray image is obtained from a full field scan of the pouched product. In other embodiments, the x-ray image is obtained from a line scan of the pouched product.

In some embodiments, the x-ray image is produced from an x-ray source having an energy of about 20kVp to about 40kVp. The x-ray source may comprise an x-ray tube having a molybdenum target and a molybdenum filter. The x-ray tube may have a beryllium window.

In a second aspect of the invention, there is provided an apparatus for manufacturing a pouched product containing a dose of powdered material and an object, configured to carry out the method of the first aspect and any of the additional method steps disclosed above.

In a third aspect of the invention, there is provided an apparatus for manufacturing a pouched product containing a dose of powdered material and an object, comprising: a dosing device configured to supply the powdered material and the object to an interior volume of a partially-formed pouch formed by a substantially continuous pouch material; a sealing device configured to seal the pouch material to create the pouched product; and an x-ray imaging device configured to obtain an x-ray image of the pouch to determine one or more of: the presence or absence of the powder and/or object within the pouched product, the quantity of powder and/or objects within the pouched product, the location of the powder and/or object within the pouched product, the condition of the powder and/or object and/or pouch material, and the presence or absence of a foreign object within the pouched product.

The apparatus of the third aspect may further be configured to carry out any of the additional method steps disclosed above.

The present disclosure generally relates to products configured for oral use. The term "configured for oral use" means that the product is provided in a form such that during use, saliva in the mouth of the user causes one or more of the components of the mixture (e.g., flavouring agents and/or active ingredients) to pass into the mouth of the user. In certain embodiments, the composition is adapted to deliver components to a user through mucous membranes in the user's mouth, the user's digestive system, or both, and, in some instances, said component is a nicotine component or an active ingredient (including, but not limited to, for example, nicotine, a stimulant, vitamin, amino acid, botanical, or a combination thereof) that can be absorbed through the mucous membranes in the mouth or absorbed through the digestive tract when the product is used.

The products relevant to the invention are pouched products, e.g., in the form of a mixture of one or more components (also referred to as a "particulate composition"), disposed within a moisture-permeable container (e.g., a water-permeable pouch). Pouched products generally comprise, in addition to the pouch-based exterior, a composition/mixture within the pouch that typically comprises one or more active ingredients and/or one or more flavourants, and various other optional ingredients. According to the present disclosure, such composition/mixture further comprises one or more objects, which includes capsules.

In some embodiments, the composition/mixture can comprise any filling composition, including those included within conventional pouched products, and further comprising one or more capsules. Such particulate compositions are generally mixtures of two or more components and as such, the compositions are, in some cases, referenced below as a "mixture."

Such mixtures in the water-permeable pouch format are typically used by placing a pouch containing the mixture in the mouth of a human subject/user. Generally, the pouch is placed somewhere in the oral cavity of the user, for example under the lips, in the same way as moist snuff products are generally used. The pouch preferably is not chewed or swallowed. However, in some embodiments, chewing may be advantageous, e.g., to rupture the capsule. Exposure to saliva causes some of the components of the mixture within the water-permeable pouch (e.g., flavouring agents and/or active agents) to pass through e.g., the water-permeable pouch and provide the user with flavour and satisfaction, and the user is not required to spit out any portion of the mixture. After about 10 minutes to about 60 minutes, typically about 15 minutes to about 45 minutes, of use/enjoyment, substantial amounts of the mixture have been ingested by the human subject, and the pouch may be removed from the mouth of the consumer for disposal. Preferred pouch materials for products described may be designed and manufactured such that under conditions of normal use, a significant amount of the contents of the formulation within the pouch permeate through the pouch material prior to the time that the pouch undergoes loss of its physical integrity.

Objects that can be included in the pouched product include capsules. Capsules generally comprise an internal payload ("filling") component and a capsule wall. The capsules can have any range of shapes, such as generally rectilinear, oblong, elliptical, oval or spherical shapes.

The capsule wall is generally formed of a material that is configured to allow for dispersement of the internal payload under desired conditions. For example, the capsule wall may comprise a material that is configured to dissolve or otherwise degrade under mouth conditions. As another example, the capsule wall may comprise a material that is configured to be broken or otherwise degraded by shear forces (e.g. chewing). The crush strength of suitable capsules can be sufficient to allow for normal handling and storage without significant degree of premature or undesirable breakage. Providing capsules that possess both suitable integrity during storage and the ability to rupture or otherwise break down at the time of use can be determined by experimentation, depending upon factors such as capsule size and type, and is a matter of design choice.

The composition of the capsule wall may vary depending upon the nature of the internal payload. For example, where internal payload is particulate or comprises a non-aqueous liquid, the capsule wall can comprise, e.g., a material such as wax, gelatin, cyclodextrin, or alginate. Classes of materials that can typically be used to form the capsule wall include, but are not limited to, proteins, polysaccharides, starches, waxes, fats, natural and synthetic polymers, and resins. In some embodiments, the composition of the capsule wall is selected so as to accommodate an aqueous internal payload therein. In this case, the composition of capsule wall must be selected so as to be at least partially resistant to water, e.g., so as to retain a water-containing payload therein without any substantial degradation for a period of time.

The composition of the internal payload component can vary. As referenced above, the payload can comprise a particulate material, including a powder payload, a non-aqueous (e.g., organic) liquid, and/or an aqueous (i.e., water-containing) liquid. Liquid-containing payloads can comprise, e.g., neat liquids, solutions, emulsions, or dispersions. In some embodiments, capsules are provided which comprise, as payload, an organic liquid such as an alcohol or oil. In some embodiments, capsules are provided which comprise, as payload, water. In further embodiments, payload can comprise a mixture of water and a miscible liquid, such as alcohol or glycerin. Liquid-containing payloads can comprise the liquid(s) alone or can comprise one or more additional components/additives. For example, in some embodiments, the internal payload comprises one or more release-modifying agents; one or more flavourants, one or more active ingredients, or any combination of two or more thereof. For example, in some embodiments, payload comprises a flavourant (e.g., menthol).

Certain specific examples of capsules include, but are not limited to, a capsule comprising a menthol-containing payload within a gelatin capsule wall. The capsules can be formed using any encapsulating technology known in the art.

The particulate composition may comprise one or more filler components. Such particulate filler components may fulfill multiple functions, such as enhancing certain organoleptic properties such as texture and mouthfeel, enhancing cohesiveness or compressibility of the product, and the like. Generally, filler components are porous, particulate materials and are cellulose-based. For example, suitable particulate filler components are any non-tobacco plant material or derivative thereof, including cellulose materials derived from such sources.

The particulate composition may comprise one or more flavouring agents. As noted above, in some embodiments, the particulate composition comprises a capsule wherein the payload comprises one or more flavouring agents. In some such embodiments, the one or more flavouring agents within the capsule are the only flavouring agents within the particulate composition. In other embodiments, the particulate composition further comprises one or more additional flavourants (wherein the one or more additional flavourants (in non-encapsulated form) can be the same as or different than the one or more flavourants within payload of the capsule). In other embodiments, the capsule within a given particulate composition do not comprise a flavourant; in such embodiments, the particulate composition typically comprises one or more non-encapsulated flavourants.

As used herein, a "flavouring agent" or "flavourant" is any flavourful or aromatic substance capable of altering the sensory characteristics associated with the oral product. Examples of sensory characteristics that can be modified by the flavouring agent include taste, mouthfeel, moistness, coolness/heat, and/or fragrance/aroma. Flavouring agents may be natural or synthetic, and the character of the flavours imparted thereby may be described, without limitation, as fresh, sweet, herbal, confectionary, floral, fruity, or spicy.

The particulate composition may comprise one or more of the following additional components: taste modifiers, salt, sweetener, binding agent, humectant, processing aid, buffering agent, oral care ingredient, colorant, active ingredient (e.g. botanical, stimulant, amino acid, vitamin, antioxidant, nicotine component, organic acid, cannabinoid, terpene, pharmaceutical ingredient), tobacco material.

In various embodiments, a moisture-permeable packet or pouch can act as a container for use of the composition within. For example, the pouch provides a liquid-permeable container of a type that may be considered to be similar in character to the mesh-like type of material that is used for the construction of a tea bag. If desired, flavouring ingredients, disintegration aids, and other desired components, may be incorporated within, or applied to, the pouch material. Suitable packets, pouches or containers may be of the type used for the manufacture of smokeless tobacco products.

The pouch can be formed from a fleece material, e.g. a fibrous nonwoven web. A "fleece material" may be formed from various types of fibers (e.g., cellulosic fibers; such as viscose fibers, regenerated cellulose fibers, cellulose fibers, and wood pulps; cotton fibers; other natural fibers; or polymer/synthetic-type fibers) capable of being formed into a traditional fleece fabric or other traditional pouch material. For example, a fleece material may be provided in the form of a woven or nonwoven fabric.

The pouch material may not dissolve under conditions of normal use (i.e. upon contact with saliva in the mouth of a user). In some embodiments, the pouch material can be dissolvable (i.e. orally ingestible) such that upon contact with saliva in the mouth of a user, the pouch material dissolves. Preferably, the pouch material will dissolve after a significant amount of the soluble components of the composition within the pouch (e.g., active ingredient(s) and/or flavourant(s)) permeate through the pouch material into the mouth of the user. For example, the pouch material can be configured to dissolve at a rate such that the pouch material holds the composition together for a period of time sufficient to allow for the release of substantially all water soluble components.

### Brief Description of the Drawings

Embodiments of the invention will now be described by way of example only and with reference to the accompanying drawings, in which:
Fig. 1 shows a pouched product for oral use;
Fig. 2 shows a schematic view of a dosing device suitable for use with the present invention;
Fig. 3 shows a schematic view of a full field x-ray imaging system for use with the present invention;
Fig. 4 shows a schematic view of a line scan x-ray imaging system for use with the present invention;
Fig. 5 shows a schematic view of a line scan x-ray imaging system and a split conveyor for use with the present invention;
Fig. 6 shows x-ray images of pouched products in different conditions; and
Fig. 7 shows x-ray images of pouched products in different conditions together with corresponding threshold image analysis results.

### Detailed Description

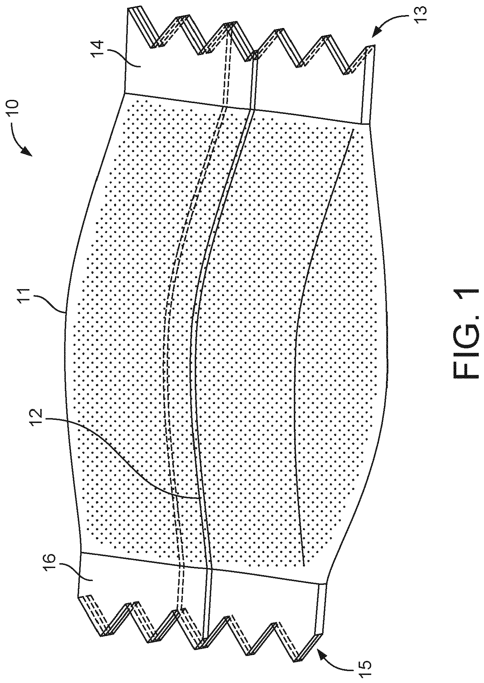

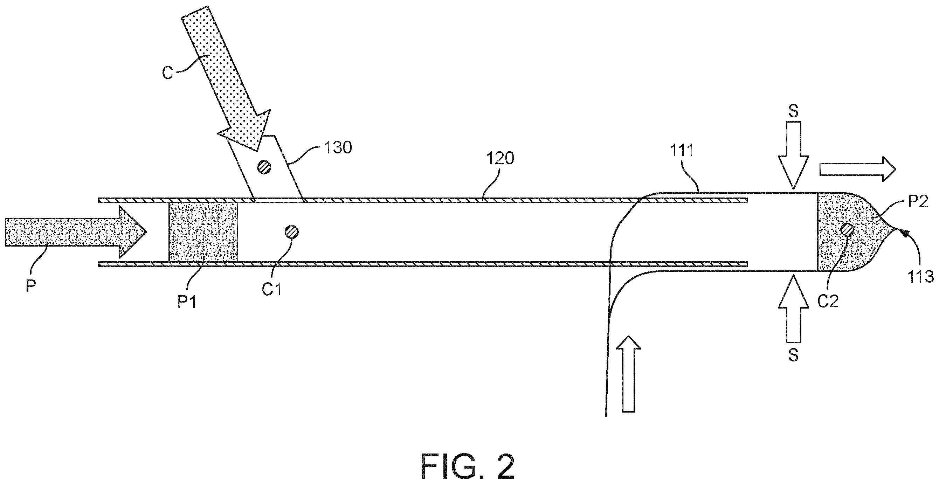

Fig. 1 shows a pouched product 10 for oral use which contains a dose of powder and a capsule. The pouch is formed from a web of water-permeable nonwoven material 11 which is formed into a continuous tube by wrapping the web around a supply channel (shown in Figs. 2 to 6) and forming a longitudinal seal 12. The leading end 13 of the tube is sealed by a saw-tooth cut/seal 14. After the powder dose and capsule are added to the interior of the tube adjacent the leading end, the trailing end 15 of the pouch is sealed and separated from the continuous tube by forming a further saw-tooth cut/seal 16 to form a discrete pouched product containing the powder dose and the capsule.

Fig. 2 shows a schematic view of a dosing device suitable for use with the invention. Dosing device 100 includes a powder supply channel 120 for receiving the dose of powdered material P1 prior to combination with the capsule C1 and for supplying the combined powdered material and capsule to the interior volume of a partially-formed pouch. The powder supply channel 120 receives the dose of powdered material P1 by means of pressurized air in the direction of arrow P.

Dosing device 100 also includes an object supply channel 130 which supplies the capsule C1 to the powder supply channel. The capsule is supplied to the powder supply channel 120 from the object supply channel 130 by means of pressurized air in the direction of arrow C.

A substantially continuous tube of nonwoven material 111 is formed around the downstream end of the powder supply channel 120. The leading end 113 of the tube has been sealed and a dose of powder P2 and capsule C2 are present in the interior of the tube adjacent the leading end 113. A further combined cut/seal is about to be formed by a sealing device shown schematically by arrows S, behind the powder and capsule, to form the trailing end of the pouch and thereby the discrete pouched product. This also forms a new leading end seal for the next pouch, which will receive powder dose P1 and capsule C1.

Following manufacture, the pouched product is moved to an inspection area where an x-ray image is obtained. The inspection area is configured such that there is an x-ray source on one side of the product which illuminates an x-ray sensitive detector on the other side of the product. As the sample passes through the x-ray beam its x-ray shadow is projected onto the detector. The detector then converts the intensity of the x-ray photons hitting the detector into an equivalent electronic signal in which the greater the signal the more x-rays have passed through the product. The quantity of x-rays that pass through the product and hit the detector are related to the overall accumulated density that the x-ray beam has had to pass through to get to the Detector - the greater the density, the fewer x-rays that will pass through. The detected variation in x-ray intensity can then be processed to provide an x-ray shadowgraph image in which the of the variation in grey level in the x-ray image is related to the density in the product. Analysis of the image can then determine various features within the sample including the presence or absence of the capsule, and an assessment as to whether the capsule is complete or "burst".

Within an x-ray imaging system there are three key components: the x-ray source, the x-ray detector and in certain applications, the transport system that moves the product into and out of the inspection area.

### X-Ray Source

The selection of the x-ray source may be driven by the several factors:
- Geometry of the system (is magnification required?)
- kV, mA (related to penetration ability and flux)
- Power
- Beam geometry

For this application, the product is relatively low density so an energy of 20kVp to 40kVp may be suitable. To optimise performance at these energies the x-ray tubes may employ a Molybdenum target combined with a thin Molybdenum filter.

A suitable x-ray tube is a Petrick 50kV, 1mA tube with:
- Molybdenum target
- Beryllium window
- Forced air external cooling
- 24° Output cone

### Detector

Digital X-ray detectors can be either direct or indirect. In direct imaging, the x-ray photons striking the detector interact directly with the detector material to produce an electrical signal without any need for any intermediate conversion. An alternative method is indirect detection where the x-ray photons first interact with a screen produced from an x-ray sensitive scintillator or phosphor material bonded to, or viewed by, a photosensitive device. In the indirect scenario, an x-ray photon striking the screen is converted into visible light which is then detected by the photosensitive device which in turn produces an electrical signal that is proportional to the intensity of x-rays hitting the intermediate screen. Both direct and indirect detection technology can be applied to different styles of detector arrangements that permit either full field or linescan imaging. Full field detection requires the product to be placed in front of the detector panel and when the x-ray source is activated, the whole object is imaged - very much like a digital form of x-ray film. However, linescan imaging requires the x-ray beam to be highly collimated into a thin fan beam that illuminates the linear x-ray detector, and the product is transported through the fan beam and the x-ray image is produced, line-by-line.

Both full field and linescan imaging techniques are suitable for this application. However, a limiting factor for both techniques will be where the image is acquired. Due to the low energy x-ray, imaging the pouch through any form of conveyor will result in the detail of the capsule being degraded or perhaps totally lost in the resultant x-ray image. There are two solutions to overcome this issue:
- Linescan only: Create a small gap, e.g. approximately 3mm, in the conveyor such that the fan beam can pass straight through the product unhindered by any conveyor material.
- For both Linescan and Full Field: The pouch could be imaged in free air just after the sealing process as the pouch drops onto the conveyor. This ensures there is no additional material in the image path, and that the object will be travelling at a known fixed rate. Processing of the image should be sufFiciently fast that any defect can be recognised whilst the pouch is still in freefall and rejected by a simple "air jet ejector" triggered by the x-ray inspection system.

### Image Processing

Through transmission x-ray, an image of the pouch will be acquired from either a Linescan Detector Array (LDA) or a Flat Panel Detector (FPD) while the pouch is moving. LDAs require a moving object to build up an image; each line of acquired data is added to the previous to build up a two-dimensional image referred to as a frame. FPDs are typically used with a stationary object to minimise motion blur. An FPD will integrate the x-ray signal over a short period in which time, if the object moves, a blurring effect can result. To minimise the motion blur, a high speed FPD can be used with a short integration time (typically less than 17ms per capture equivalent to 60 frames per second). This will give enough clarity in the image to be able to differentiate between the powder and capsule.

Synchronising the data capture will be either with a hard trigger or a soft trigger. A hard trigger is something physical in the system such as the pouch breaking the light beam of a photosensor. This will trigger the detector to acquire an image - in the case of an LDA, a fixed number of lines will be acquired which represent the length of the pouch. A hard trigger with a FPD will be trigged when the pouch is over the sensing area of the FPD resulting in an image being taken of the whole pouch.

A soft trigger is performed in software where the detectors are constantly acquiring data - either line- by-line (LDA) or shots of an area (FPD). A software algorithm can look for a shadow which represents a pouch moving across the system. On finding a pouch, the image in which the pouch is found is processed to determine if the capsule is present and intact or otherwise.

There may be a scenario where the system is stopped during production (e.g. due to a fault). In this case, there may be pouches in the system which will be in the process of being manufactured and not yet inspected. On restarting the process, the line speed will typically ramp up to production speeds. In the ramping up phase, the pouches passing over the FPD using either a hard or soft trigger will be imaged as normal. However, an LDA will need to know about the ramp up phase so that it collects the image data at the correct rate line by line. Without some sort of synchronisation, the data from an LDA during this ramp up phase will look stretched across the direction of travel. An encoder can be used to maintain the LDA in synchronisation with the speed of the line. One pulse from the encoder can for example trigger an acquisition of one line of data from the LDA.

Once an image of a whole pouch is acquired, using either an LDA or FPD, the image can be analysed to determine where the pouch is and its metrics, such as centre of gravity, leading edge position, and segmentation of the capsule inside the pouch. If a clear capsule cannot be identified, the image can be analysed further to determine if the capsule has burst or is missing altogether. In the case where the capsule has burst, the remains of the capsule will still be inside the pouch.

A pouch can then be classified into one of three classifications good, missing capsule or burst capsule. In the case of missing capsule or burst capsule, the outcome to the reject mechanism will be the same, i.e. remove from the production line. Results of the pouch inspection can be stored to a database with date and time stamps along with any other available metrics for offline analysis. This will include but is not limited to the failure rates, total throughput, and system downtime.

To handle the decision from the image processing on whether the pouch is good or bad, the software will know the time at which the image was acquired. Between the acquisition point and the reject point - the point at which the pouch will be directed to the reject bin if bad - will be a fixed number of encoder pulses. Once a decision has been made, in which time there will be a certain number of pulses already passed, the signal will be sent to the reject mechanism (such as air nozzles to redirect the pouch away from the good stream). It is possible to send a good or bad signal for every pouch. This gives the flexibility to the reject mechanism to handle pouches which are of varying length or have been repositioned along the way. The reject mechanism will stay in the reject state until it knows the decision of the next pouch at which point it will change its reject state.

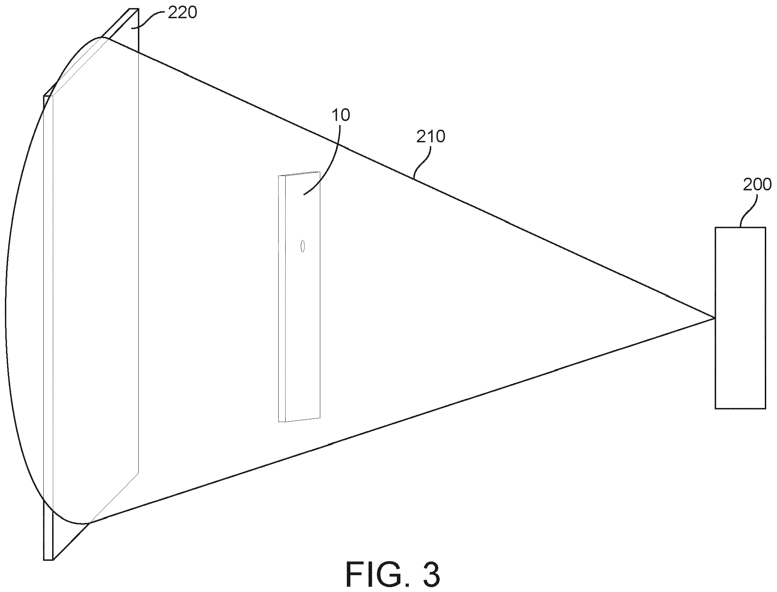

Fig. 3 shows a schematic view of a full field x-ray imaging system for use with the present invention. X-ray source 200 produces an x-ray beam 210 having a cone-shaped geometry suitable to capture an image of the whole product 10 by the flat panel detector 220. The product is ideally static or moving slowly during image acquisition.

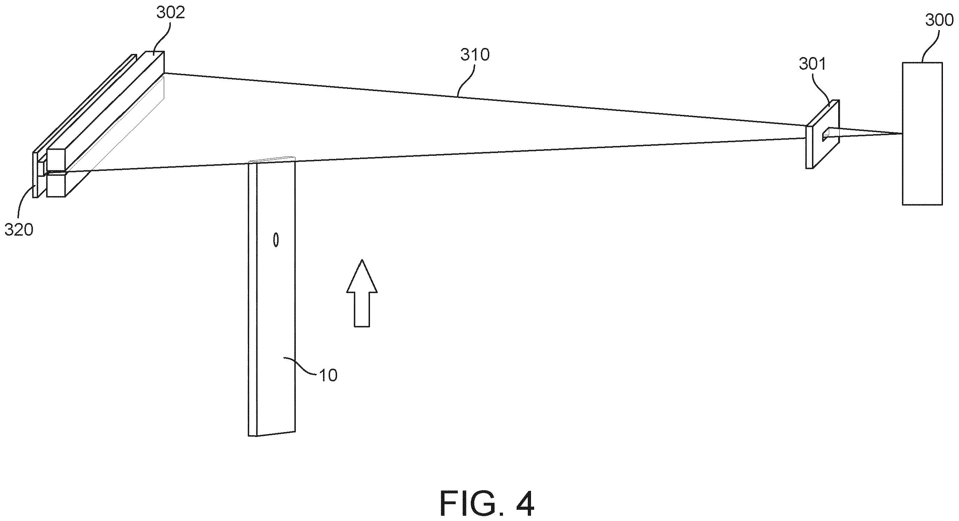

Fig. 4 shows a schematic view of a line scan x-ray imaging system for use with the present invention. X-ray source 300 produces an x-ray beam 310 having a fan shape to capture a line-by-line image of the product 10 by the linear detector array 320 as it moves through the beam in the direction of the arrow. The x-ray system has a primary collimator 301 to convert the cone-shaped beam emanating from the source 300 into a fan-shaped beam and a secondary collimator 302 to minimise x-ray scatter. The product ideally moves through the beam at a constant speed to acquire a full image.

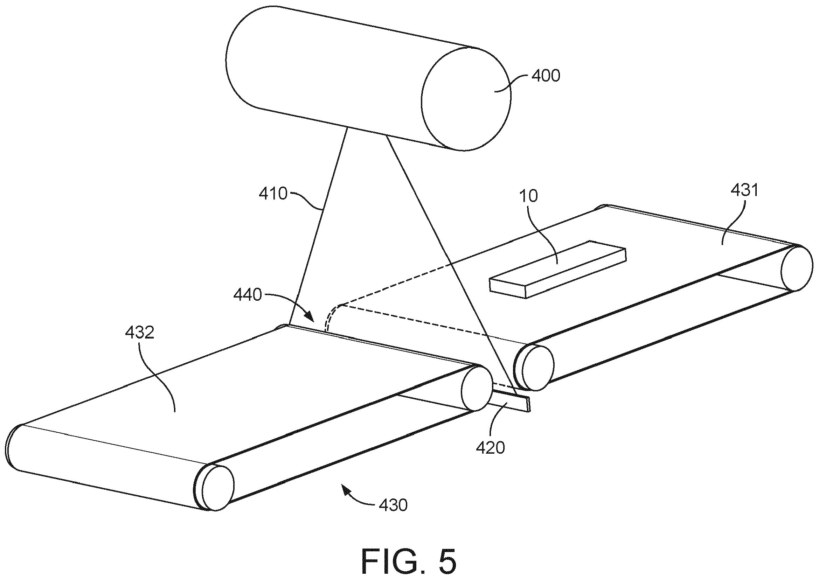

Fig. 5 shows a schematic view of a line scan x-ray imaging system and a split conveyor for use with the present invention. X-ray source 400 produces an x-ray beam 410 having a fan shape to capture a line-by-line image of the product 10 by the linear detector array 420 as it moves through the beam. Conveyor 430 is split into two parts 431 and 432 in order that a gap 440 (e.g. about 3mm) is provided between them to allow the x-ray beam to pass through the product and to the detector array 420 unobstructed.

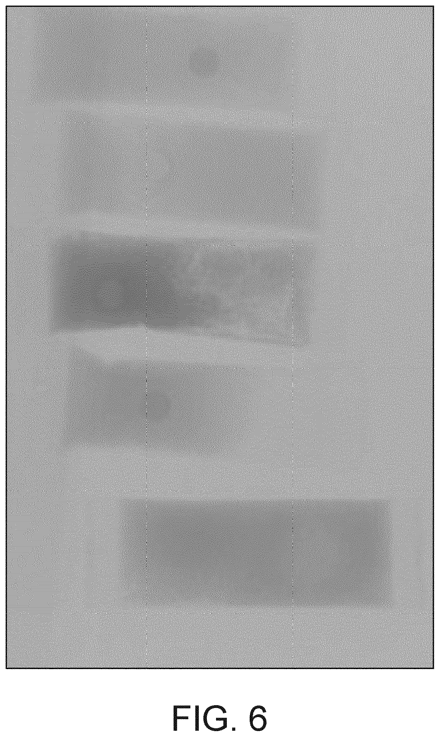

Fig. 6 shows x-ray images of pouched products in different conditions. Starting from the top image, the images show: dry powder, unburst capsule; dry powder, burst capsule; wet powder, unburst capsule; powder lumped at one end, unburst capsule; wet powder, burst capsule. Thresholding techniques can be used to detect each condition.

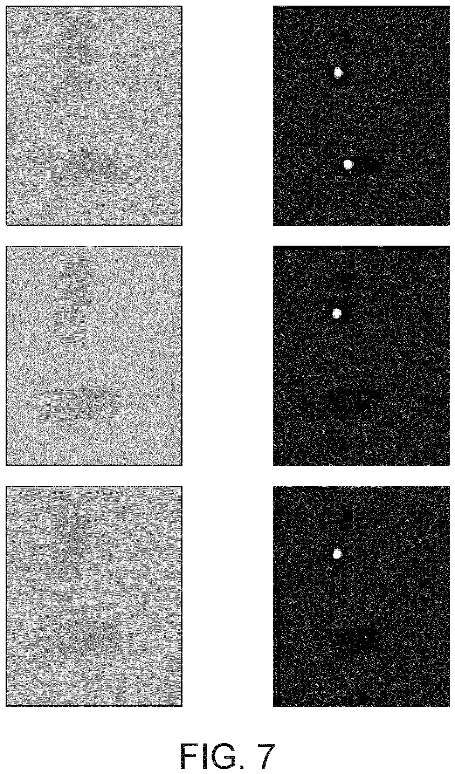

Fig. 7 shows x-ray images on the left of pouched products in different conditions together with corresponding threshold image analysis results on the right. The top images show unburst product samples. The capsules show as white discs in the threshold images. The lower product in the middle images has a burst capsule, taken 30 seconds after bursting. The burst capsule does not show in the threshold image. The lower image was taken 48 hours after bursting.

The following clauses form part of the disclosure of the present application.
1. A method of manufacturing a pouched product containing a dose of powdered material and an object, comprising:
   supplying the powdered material and the object to an interior volume of a partially-formed pouch formed by a substantially continuous pouch material,
   sealing the pouch material to create the pouched product, and
   obtaining an x-ray image of the pouch to determine one or more of: the presence or absence of the powder and/or object within the pouched product, the quantity of powder and/or objects within the pouched product, the location of the powder and/or object within the pouched product, the condition of the powder and/or object and/or pouch material, and the presence or absence of a foreign object within the pouched product.
2. The method of clause 1, wherein the method further comprises rejecting the pouched product if the powder and/or object is absent from the pouched product, or if a foreign object is present within the pouched product.
3. The method of clause 1 or 2, wherein the method further comprises rejecting the pouched product if the quantity of powder within the pouched product does not meet a threshold quantity.
4. The method of any of clauses 1 to 3, wherein determining the location of the powder and/or object within the pouched product comprises determining the location of the object relative to the powder and/or determining the location of the object and/or powder relative to the pouch.
5. The method of any of clauses 1 to 4, wherein the object is a capsule containing a liquid.
6. The method of clause 5, wherein determining the condition of the capsule includes determining whether the capsule is in a burst or unburst condition.
7. The method of clause 5 or 6, wherein determining the condition of the powder includes determining whether the powder is in a wet or dry condition.
8. The method of any of clauses 1 to 7, wherein determining the condition of the pouch material includes determining whether the pouch material is in a sealed or unsealed condition.
9. The method of any of clauses 1 to 8, wherein the determining step comprises comparing a property of the x-ray image with a threshold property.
10. The method of clause 9, wherein the property relates to shape, outline, shading, brightness, contrast.
11. The method of clause 9 or 10, wherein the method further comprises rejecting the pouched product if the property does not meet the threshold.
12. The method of any of clauses 1 to 11, wherein the x-ray image is obtained from a full field scan of the pouched product.
13. The method of any of clauses 1 to 11, wherein the x-ray image is obtained from a line scan of the pouched product.
14. The method of any of clauses 1 to 13, wherein the x-ray image is produced from an x-ray source having an energy of about 20kVp to about 40kVp.
15. The method of clause 14, wherein the x-ray source comprises an x-ray tube having a molybdenum target and a molybdenum filter.
16. The method of clause 15, wherein the x-ray tube has a beryllium window.
17. Apparatus for manufacturing a pouched product containing a dose of powdered material and an object, configured to carry out the method of any of clauses 1 to 16.
18. Apparatus for manufacturing a pouched product containing a dose of powdered material and an object, comprising:
   a dosing device configured to supply the powdered material and the object to an interior volume of a partially-formed pouch formed by a substantially continuous pouch material,
   a sealing device configured to seal the pouch material to create the pouched product, and
   an x-ray imaging device configured to obtain an x-ray image of the pouch to determine one or more of: the presence or absence of the powder and/or object within the pouched product, the quantity of powder and/or objects within the pouched product, the location of the powder and/or object within the pouched product, the condition of the powder and/or object and/or pouch material, and the presence or absence of a foreign object within the pouched product.
19. The apparatus of clause 18, further configured to carry out the method of any of clauses 2 to 16.

## Claims

1. A method of manufacturing a pouched product containing a dose of powdered material and an object, comprising:
supplying the powdered material and the object to an interior volume of a partially-formed pouch formed by a substantially continuous pouch material,
sealing the pouch material to create the pouched product, and
obtaining an x-ray image of the pouch to determine one or more of: the presence or absence of the powder and/or object within the pouched product, the quantity of powder and/or objects within the pouched product, the location of the powder and/or object within the pouched product, the condition of the powder and/or object and/or pouch material, and the presence or absence of a foreign object within the pouched product.

2. The method of claim 1, wherein the method further comprises rejecting the pouched product if the powder and/or object is absent from the pouched product, or if a foreign object is present within the pouched product.

3. The method of claim 1 or 2, wherein the method further comprises rejecting the pouched product if the quantity of powder within the pouched product does not meet a threshold quantity.

4. The method of any of claims 1 to 3, wherein determining the location of the powder and/or object within the pouched product comprises determining the location of the object relative to the powder and/or determining the location of the object and/or powder relative to the pouch.

5. The method of any of claims 1 to 4, wherein the object is a capsule containing a liquid.

6. The method of claim 5, wherein determining the condition of the capsule includes determining whether the capsule is in a burst or unburst condition.

7. The method of claim 5 or 6, wherein determining the condition of the powder includes determining whether the powder is in a wet or dry condition.

8. The method of any of claims 1 to 7, wherein determining the condition of the pouch material includes determining whether the pouch material is in a sealed or unsealed condition.

9. The method of any of claims 1 to 8, wherein the determining step comprises comparing a property of the x-ray image with a threshold property.

10. The method of claim 9, wherein the property relates to shape, outline, shading, brightness, contrast.

11. The method of claim 9 or 10, wherein the method further comprises rejecting the pouched product if the property does not meet the threshold.

12. The method of any of claims 1 to 11, wherein the x-ray image is obtained from a full field scan or a line scan of the pouched product.

13. Apparatus for manufacturing a pouched product containing a dose of powdered material and an object, configured to carry out the method of any of claims 1 to 12.

14. Apparatus for manufacturing a pouched product containing a dose of powdered material and an object, comprising:
a dosing device configured to supply the powdered material and the object to an interior volume of a partially-formed pouch formed by a substantially continuous pouch material,
a sealing device configured to seal the pouch material to create the pouched product, and
an x-ray imaging device configured to obtain an x-ray image of the pouch to determine one or more of: the presence or absence of the powder and/or object within the pouched product, the quantity of powder and/or objects within the pouched product, the location of the powder and/or object within the pouched product, the condition of the powder and/or object and/or pouch material, and the presence or absence of a foreign object within the pouched product.

15. The apparatus of claim 14, further configured to carry out the method of any of claims 2 to 12.
